(19) Europäisches Patentamt
European Patent Office
Office européen des brevets

(11) EP 0 803 991 B1

(12) FASCICULE DE BREVET EUROPEEN

(45) Date de publication et mention de la délivrance du brevet:
**02.01.2004 Bulletin 2004/01**

(51) Int Cl.[7]: **H04B 7/005**

(21) Numéro de dépôt: **97400887.2**

(22) Date de dépôt: **21.04.1997**

# (54) Procédé pour optimiser la communication radio entre une base fixe et un mobile

Verfahren zur Optimierung von Funkkommunikation zwischen einer Basisstation und einer Mobilstation

Method for optimising radio communication between a base station and a mobile

(84) Etats contractants désignés:
**AT BE CH DE DK ES FI GB GR IE IT LI LU MC NL PT SE**

(30) Priorité: **24.04.1996 FR 9605173**

(43) Date de publication de la demande:
**29.10.1997 Bulletin 1997/44**

(73) Titulaires:
- **Lewiner, Jacques**
  **92210 Saint-Cloud (FR)**
- **Carreel, Eric**
  **F-92190 Meudon (FR)**
- **Fink, Mathias**
  **92190 Meudon (FR)**

(72) Inventeurs:
- **Lewiner, Jacques**
  **92210 Saint-Cloud (FR)**
- **Carreel, Eric**
  **F-92190 Meudon (FR)**
- **Fink, Mathias**
  **92190 Meudon (FR)**

(74) Mandataire: **Burbaud, Eric**
**Cabinet Plasseraud**
**84, rue d'Amsterdam**
**75440 Paris Cédex 09 (FR)**

(56) Documents cités:
**EP-A- 0 096 943** **EP-A- 0 593 186**
**WO-A-95/22873** **GB-A- 2 225 199**

EP 0 803 991 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention est relative aux procédés pour optimiser la communication entre une base fixe et un mobile.

La communication radio entre un émetteur et un récepteur, dont l'un est mobile, est rendue difficile par le fait que les ondes radios qui vont de l'émetteur au récepteur suivent simultanément une multitude de chemins de longueurs différentes, en subissant de nombreuses réflexions, et par le fait que ces chemins différents varient au cours du temps en fonction des déplacements du mobile ou en fonction des modifications de l'environnement immédiat du mobile (notamment : circulation de véhicules au voisinage du mobile).

Il en résulte que le signal capté à l'arrivée est constitué par la superposition d'une multitude de signaux déphasés les uns des autres et correspondant respectivement aux différents chemins suivis par l'onde radio entre l'émetteur et le récepteur, de sorte que d'une part, le signal capté est difficile à décoder, et d'autre part, il se produit des phénomènes d'interférences qui, dans certaines positions particulières de l'antenne du récepteur, peuvent annuler entièrement le signal capté.

Pour tenter de remédier à ces inconvénients, plusieurs palliatifs sont connus :

- on peut augmenter la puissance d'émission du mobile et de la base, mais cette disposition est peu efficace car elle augmente également le niveau de bruit dû aux multiples réflexions du signal radio et de plus, elle est difficilement applicable en ce qui concerné le mobile, pour lequel une augmentation de la puissance d'émission signifie une augmentation de poids et d'encombrement ainsi qu'une baisse d'autonomie ;
- il est possible également de multiplier les bases fixes afin d'avoir toujours une communication radio à faible distance entre chaque mobile et une base fixe, mais cette solution est coûteuse ;
- il est également connu d'utiliser au niveau de la base fixe une multitude d'antennes synchronisées agencées en réseau, ce qui peut permettre de réduire les problèmes dus aux interférences destructives, mais n'améliore pas le rapport signal/bruit du signal capté et ne prend pas en compte les évolutions de l'environnement électromagnétique.

Par ailleurs, le document WO95/22873 décrit un procédé pour optimiser la communication radio entre des mobiles et une base fixe dotée d'une pluralité d'antennes, procédé qui fait appel à un filtrage spatial utilisant des réponses impulsionnelles de différents canaux.

La présente invention a notamment pour but de proposer une nouvelle solution technique qui soit plus satisfaisante que les solutions susmentionnées.

A cet effet, l'invention propose un procédé pour optimiser la communication radio entre d'une part une base fixe émettrice et réceptrice, pourvue d'une pluralité d'antennes synchronisées agencées en réseau, et d'autre part au moins un mobile émetteur et récepteur, ce procédé consistant, pour chaque antenne i, à traiter dans la base fixe un signal électrique $S_i(t)$ qui est un signal de réception reçu du mobile considéré par cette antenne ou qui est un signal d'émission destiné à être émis par ladite antenne vers ce mobile, en déterminant un signal électrique corrigé $S'_i(t) = h'_i(-t) \otimes S_i(t)$, où :

- $\otimes$ désigne le produit de convolution,
- t désigne le temps,
- $h'_i(-t)$ est une approximation de l'inversion temporelle de la réponse. impulsionnelle $h_i(t)$ entre l'antenne i et le mobile, cette réponse impulsionnelle étant telle que lorsqu'un signal radio E(t) est émis par l'un de l'antenne et du mobile, l'autre de ces deux éléments reçoit un signal $R(t)=h_i(t) \otimes E(t)$,

le signal corrigé $S'_i(t)$ étant ensuite soit émis par l'antenne considérée vers le mobile si le signal $S_i(t)$ est un signal d'émission, soit combiné aux autres signaux reçus par les autres antennes de la base fixe si le signal $S_i(t)$ est un signal de réception.

Dans des modes de réalisation préférés, on peut éventuellement avoir recours en outre à l'une et/ou l'autre des dispositions suivantes :

- le procédé comporte les étapes suivantes :

  a) déterminer pour chaque antenne i une approximation $h'_i(t)$ de la réponse impulsionnelle $h_i(t)$,
  b) inverser temporellement ladite approximation $h'_i(t)$, en déterminant ainsi l'approximation $h'_i(-t)$ de la réponse impulsionnelle inverse $h_i(-t)$,
  c) et pour chaque antenne i, traiter le signal électrique $S_i(t)$ afin de déterminer le signal corrigé correspondant $S'_i(t)$ ;

- au cours de l'étape a), l'approximation $h'_i(t)$ de la réponse impulsionnelle propre à chaque antenne est déterminée à partir d'un signal radio prédéterminé émis par le mobile, cette étape a) étant conduite à intervalles de temps réguliers pour chaque mobile ;
- les étapes a) et b) sont effectuées une fois pour toute pour une zone géographique donnée, l'étape a) consistant à émettre au moins un signal radio prédéterminé successivement à partir d'une pluralité de points k de la zone considérée, pour déterminer ainsi une série d'approximations $h'_{ik}(t)$ des réponses impulsionnelles $h'_{ik}(t)$ entre chaque point j et chaque antenne i de la base, puis à calculer l'approximation $h'_i(t)$ par la formule $h'_i(t)$ =

$$\sum_k a_k h'_{ik}(t),$$

où les termes $a_k$ désignent des coefficients de pondération (éventuellement égaux entre eux), l'inversion temporelle $h'_i(-t)$ de cette approximation $h'_i(t)$ étant ensuite utilisée à l'étape c) pour traiter les signaux émis vers ou reçus de tout mobile se trouvant dans la zone donnée susmentionnée ;
- la base fixe couvre plusieurs des zones susmentionnées, une série d'approximations $h'_i(-t)$ de l'inversion temporelle de la réponse impulsionnelle ayant été déterminée une fois pour toutes aux étapes a) et b) pour chacune des zones susmentionnées,

et on met en oeuvre successivement l'étape c) au moins au début de chaque communication entre la base fixe et chaque mobile, respectivement avec chacune des séries d' approximations $h'_i(-t)$ correspondant respectivement aux différentes zones, en déterminant à chaque fois un signal corrigé $S'_i(t)$ à partir d'un signal $S_i(t)$ reçu du mobile considéré, puis en déterminant quelle série d'approximations $h'_i(-t)$ correspondant à une zone donnée optimise la combinaison des signaux corrigés $S'_i(t)$, cette série d'approximations $h'_i(-t)$ étant ensuite utilisée pour corriger les signaux émis vers ou reçus du mobile considéré ;

- les signaux radio normalement émis par la base sont des signaux modulés ayant une fréquence porteuse f0, les signaux normalement émis par le mobile étant des signaux modulés ayant une fréquence porteuse f1 différente de f0, et les étapes a) et b) étant conduites :

  . d'une part, en faisant émettre par le mobile ou à partir de chaque point k, un premier signal radio prédéterminé ayant des fréquences voisines de f0 pour déterminer ainsi une approximation $h'_i(-t)_{em}$ de l'inversion temporelle de la réponse impulsionnelle qui soit valable pour traiter ultérieurement au cours de l'étape c) les signaux destinés à être émis par l'antenne i ;
  . et d'autre part, en faisant émettre, par le mobile ou à partir de chaque point k, un second signal radio prédéterminé ayant des fréquences voisines de f1 pour déterminer ainsi une approximation $h'_i(-t)_{re}$ de l'inversion temporelle de la réponse impulsionnelle qui soit valable pour traiter ultérieurement au cours de l'étape c) les signaux reçus par l'antenne i ;

- les signaux radio normalement émis par la base sont des signaux modulés ayant une fréquence porteuse f0, le procédé comportant les étapes supplémentaires suivantes :

  a'1) faire émettre par le mobile ou à partir de chaque point k un signal radio monochromatique E(t,f0) de f réquences f0,
  a'2) capter au moyen de chaque antenne i un signal électrique monochromatique $R_i(t,f0)$ correspondant au signal émis E(t,f0),
  a'3) déterminer à partir de ce signal capté une valeur complexe $H_i(f0) = A_i e^{j\phi i}$ définie par :

$$R_i(t,f0) = H_i(f0) .E(t,f0) ,$$

L'étape c) du procédé comportant par ailleurs les trois sous-étapes suivantes, pour déterminer le signal corrigé $S'_i(t)$ à partir d'un signal d'émission $S_i(t) = P(t) .e^{js(t)}$, où P(t) est un signal porteur de fréquence f0 et s(t) est un signal modulant :

  c1) déterminer par voie analogique le produit

$$P'(t) = P(t).[-H_i(-f0)], \text{ où } H_i(-f0) = A_i e^{-j\phi i \cdot}$$

c2) calculer par voie numérique la fonction

$$C_i(t) = \int_{-\infty}^{+\infty} [-H_i(-f0)]^{-1} e^{-J2\pi f0\tau} e^{js(t-\tau)} h'_i(-\tau)\, d\tau$$

c3) et déterminer le signal corrigé $S'_i(t)$ en effectuant le produit des fonctions complexes P'(t) et $C_i(t)$ ;

- le signal à corriger $S_i(t)$ est un signal modulé ayant une fréquence porteuse f déterminée, ce signal étant modulé sur une plage de fréquences dont la largeur est inférieure à 1% de la fréquence porteuse f,

le procédé comportant les étapes suivantes :

d) déterminer $H_i(f) = A_i e^{j\phi i}$ qui est la valeur complexe de la fonction de transfert entre l'antenne i et le mobile pour la fréquence f, cette fonction de transfert étant telle que lorsqu'un signal radio monochromatique E(t,f) de fréquence f est émis par l'un de l'antenne et du mobile, l'autre de ces deux éléments reçoit un signal $R(t,f) = H_i(f) .E(t,f)$,
e) et déterminer le signal corrigé $S'_i(t)$ de façon approximée par le produit complexe :

$$S'_i(t) = [-H_i(-f)] .S_i(t), \text{ où } H_i(-f) = A_i e^{-j\phi i} ;$$

- au cours de l'étape d), la valeur $H_i(f)$ est déterminée dans la base à partir d'un signal radio monochromatique de fréquence f émis par le mobile, cette détermination étant effectuée à intervalles de temps réguliers pour chaque mobile ;
- au cours de l'étape d), la fonction de transfert $H_i(f)$ est déterminée pour une zone donnée une fois pour toutes, en faisant émettre un signal radio monochromatique de fréquence f successivement à partir d'une pluralité de points k de la zone considérée, pour déterminer ainsi une série de valeurs $H_{ik}(f)$ des fonctions de transfert $H_{ik}$ entre chaque point k et chaque antenne i de la base, puis pour calculer la valeur $H_i(f)$ par la formule

$$H_i(f) = \sum_k a_k H_{ik}(f),$$

où les termes $a_k$ désignent des coefficients de pondération (éventuellement égaux entre eux), la valeur Hi(-f) correspondant à cette valeur Hi(f) étant ensuite utilisée pour traiter les signaux émis vers ou reçus de tout mobile se trouvant dans la zone donnée susméntionnée ;
- la base fixe couvre plusieurs des zones susmentionnées, une série de valeurs $H_i(f)$ de la fonction de transfert ayant été déterminée à l'étape d) pour chacune des zones susmentionnées, et dans lequel on met en oeuvre successivement l'étape e) au moins au début de chaque communication entre la base fixe et chaque mobile, avec chacune des séries d'approximation $H_i(-f)$ correspondant respectivement aux différentes zones, en déterminant à chaque fois un signal corrigé $S'_i(t)$ à partir d'un signal $S_i(t)$ reçu du mobile considéré, puis en déterminant quelle série de valeurs $H_i(-f)$ correspondant à une zone donnée, optimise la combinaison des signaux corrigés $S'_i(t)$, cette série de valeurs $H_i(-f)$ étant ensuite utilisée à l'étape e) pour corriger les signaux émis vers ou reçus du mobile considéré ;
- les signaux radio normalement émis par la base sont des signaux modulés ayant une fréquence porteuse f0, les signaux normalement émis par un mobile étant des signaux modulés ayant une fréquence porteuse f 1 différente de f0, et l'étape d) étant conduite :

d'une part en faisant émettre par le mobile ou par chaque point k un signal radio monochromatique de fréquences f0 pour déterminer ainsi une valeur $H_i(f0)$ de la fonction de transfert telle que la valeur correspondante Hi(-f0) soit valable pour traiter ultérieurement au cours de l'étape e) les signaux destinés à être émis par l'antenne i,
et d'autre part en faisant émettre par le mobile (5) ou par chaque point k un signal radio monochromatique de fréquence f1 pour déterminer ainsi une valeur $H_i(f1)$ de la fonction de transfert telle que Hi(-f1) soit valable pour traiter ultérieurement au cours de l'étape e) les signaux reçus par l'antenne i.

D'autres caractéristiques et avantages de l'invention apparaîtront au cours de la description détaillée suivante de plusieurs de ses formes de réalisation, données à titre d'exemples non limitatifs, en regard des dessins joints.

Sur les dessins :

- la figure 1 est une vue schématique illustrant le principe général de l'invention,
- la figure 2 est une vue de détail de la figure 1,
- la figure 3 est une vue schématique illustrant un deuxième mode de réalisation de l'invention,
- et les figures 4 et 5 sont des vues similaires à la figure 2, pour d'autres modes de réalisation de l'invention.

La figure 1 représente schématiquement une base fixe 1 de radiotéléphonie ou similaire qui communique avec au moins un mobile 5 tel qu'un radiotéléphone ou autre émetteur/récepteur radio.
La base fixe 1 est pourvue d'une pluralité d'antennes 2 synchronisées et agencées en réseau, qui sont reliées en parallèle à un système central 3 de décodage et de traitement des données par l'intermédiaire d'ensembles 4 de traitement de signal.
Pour chaque antenne et pour chaque radiotéléphone 5, il existe une fonction du temps $h_i(t)$ qui est la réponse impulsionnelle correspondant à l'antenne i et au radiotéléphone 5 considéré.
Cette réponse impulsionnelle $h_i(t)$ correspond au signal qui serait reçu par l'antenne i si le radiotéléphone 5 en question émettait un signal radio en forme d'impulsion de Dirac, en tenant compte notamment des réflexions multiples que subissent les ondes radio sur divers obstacles M, entre le radiotéléphone 5 et l'antenne i.
Lorsque le radiotéléphone 5 émet un signal E(t) en provoquant la réception d'un signal $R_i(t)$ par l'antenne i, la réponse impulsionnelle relie également le signal $R_i(t)$ au signal E(t) par la formule :

$$R_i(t) = h_i(t) \otimes E(t) = \int_{-\infty}^{+\infty} E(\tau) h_i(t-\tau) d\tau .$$

Autrement dit, $R_i(t)$ est le produit de convolution de $h_i(t)$ par E (t) .
Par ailleurs, la réponse impulsionnelle $h_i(t)$ est valable entre l'antenne i et le mobile 5 considéré, dans les deux sens de communication : lorsque l'antenne i émet un signal $E_i(t)$, le signal $R_i(t)$ reçu par le radiotéléphone considéré est donc $R_i(t) = h_i(t) \otimes E_i(t)$.
Selon l'invention, lorsqu'un signal électrique $S_i(t)$ est reçu du radiotéléphone 5 considéré par l'antenne i ou est destiné à être émis par cette antenne vers ce mobile, on détermine à l'intérieur de la base fixe 1 un signal électrique corrigé $S'_i(t)$ qui correspond au produit de convolution de $S_i(t)$ par $h_i(-t)$ :

$$S'_i(t) = h'_i(-t) \otimes S_i(t),$$

où $h'_i(-t)$ est une approximation de l'inversion temporelle de la réponse impulsionnelle $h_i(t)$ entre l'antenne i et le mobile considéré (dans le présent texte, le signe ' désigne toujours une valeur corrigée ou approximée, mais il ne désigne en aucun cas une fonction dérivée).
Bien entendu, les signaux corrigés $S'_i(t)$ pourraient être multipliés par un terme complexe $Ae^{j\phi}$ (c'est-à-dire multipliés par A et déphasés de $\phi$, où A et $\phi$ sont des nombres réels qui constituent respectivement une amplitude et une phase) identique pour toutes les antennes i, sans pour autant sortir du cadre de l'invention.
Le signal corrigé $S'_i(t)$ est ensuite :

- soit émis par l'antenne i vers le radiotéléphone 5 si le signal $S_i(t)$ est un signal d'émission,
- soit combiné (additionné) aux autres signaux reçus par les antennes de la base fixe, si le signal $S_i(t)$ est un signal reçu par l'antenne i.

Cette correction du signal $S_i(t)$ permet de compenser les déformations qui ont été imposées par l'environnement au signal initialement émis par le radiotéléphone 5 lorque $S_i(t)$ est un signal de réception, ou de compenser les déformations qui seront imposées par l'environnement au signal émis par l'antenne i vers le radiotéléphone 5, lorsque le signal $S_i(t)$ est un signal d'émission.
Plusieurs modes de réalisation sont décrits ci-après afin d'effectuer cette correction du signal $S_i(t)$.
Dans un premier mode de réalisation, comme représenté sur la figure 2, chaque ensemble 4 de traitement de signal comprend :

- d'une part, une voie de réception 6 présentant un amplificateur 7 et un dispositif 8 de traitement de signal qui sera

décrit ci-après,

- et d'autre part, une voie d'émission 9 présentant un amplificateur 10 et un dispositif 11 de traitement de signal qui sera également décrit ci-après.

La voie de réception 6 est reliée, en amont du dispositif 8 de traitement de signal, à deux circuits 12,13, en général analogiques, qui sont adaptés pour mesurer respectivement l'amplitude $A_i$ et la phase $\phi_i$ d'un signal capté par l'antenne 2, de tels circuits étant bien connus dans l'état de la technique.
Les circuits 12,13 sont reliés respectivement à deux convertisseurs analogique-numérique 14,15 qui eux-mêmes sont reliés à un calculateur 16 doté d'une mémoire 17, ce calculateur étant prévu pour commander les dispositifs 8 et 11 de traitement de signal, comme il sera décrit ci-après.
Dans ce premier mode de réalisation, on fait émettre de temps à autre, par exemple toutes les minutes, à chaque radiotéléphone 5, une suite de signaux radio monochromatiques dont la représentation complexe est $E(t,f) = E_0 e^{j2\pi ft}$ où $E_0$ représente l'amplitude, t représente le temps et f représente la fréquence, ces signaux radio monochromatiques ayant successivement des fréquences f différentes.
Chacun de ces signaux radio monochromatiques E(t,f) est capté par chaque antenne 2 de la base, sous la forme d'un signal également monochromatique $R_i(t,f) = H_i(f) .E(t,f)$, où $H_i(f)$ est la valeur complexe prise par la fonction de transfert $H_i$ correspondant à l'antenne i et au radiotéléphone 5 considéré, pour la fréquence f considérée. De façon classique, la fonction de transfert $H_i(f)$ peut s'exprimer sous la forme :

$$H_i(f) = A_i(f)e^{j\phi i(f)},$$

où $A_i(f)$ et $\phi_i(f)$ sont respectivement le module et l'argument du nombre complexe $H_i(f)$.
Par ailleurs, de façon classique, la base 1 et le radiotéléphone 5 sont synchronisés de façon à présenter une base de temps commune, de sorte que le signal E(t,f) est parfaitement connu de la base 1.
Ainsi, au cours des émissions successives de signaux radio monochromatiques par le radiotéléphone 5, les coefficients $A_i(f)$ et $\phi_i(f)$ peuvent être mesurés respectivement par les circuits 12 et 13 des ensembles 4 de traitement de signal, pour chaque antenne 2.
Ces valeurs sont transmises au calculateur 16 correspondant, qui les stocke dans sa mémoire 17, de sorte qu'à la fin desdites émissions successives de signaux radio monochromatiques, la mémoire 17 contient, pour chaque radiotéléphone 5 qui communique avec la base 1, une série de valeurs des coefficients $A_i(f)$ et $\phi_i(f)$ qui sont représentatives d'une série de valeurs complexes $H_i(f) = A_i(f)e^{j\phi i(f)}$.
A partir de cette série de valeurs, le calculateur 16 détermine une approximation $h'_i(t)$ de la réponse impulsionnelle $h_i(t)$ correspondant à la fois à l'antenne i considérée et au radiotéléphone 5 considéré, par transformée de Fourier inverse : autrement dit l'approximation $h'_i(t)$ est déterminée par le calculateur 16 en calculant une approximation de l'expression :

$$\int_{-\infty}^{+\infty} e^{j2\pi ft} H_i(f)\,df.$$

En pratique, les signaux radio normalement émis par la base sont des signaux modulés ayant une fréquence porteuse f0, et les signaux normalement émis par le radiotéléphone 5 sont également des signaux modulés ayant une fréquence porteuse f1 qui peut être différente de f0.
Dans ce cas, on préférera généralement utiliser deux approximations différentes de la fonction de transfert $H_i(t)$, pour traiter dans la base 1 respectivement les signaux d'émission et les signaux de réception.
A cet effet, les opérations décrites ci-dessus sont conduites successivement en faisait émettre par le radiotéléphone 5 d'une part une série de signaux radio monochromatiques ayant des fréquences voisines de la fréquence f0, et d'autre part une série de signaux radio monochromatiques ayant des fréquences voisines de la fréquence f1.
Le calculateur 16 détermine ainsi pour chaque radiotéléphone 5, d'une part une approximation $h'_i(t)_{em}$ qui est valable pour les signaux émis par la base vers le radiotéléphone considéré, et d'autre part une approximation $h'_i(t)_{re}$ qui est valable pour les signaux reçus par la base depuis ledit radiotéléphone.
Le calculateur 16 détermine alors les fonctions temporellement inversées $h'_i(-t)_{em}$ et $h'_i(-t)_{re}$, correspondant respectivement aux deux approximations susmentionnées de la réponse impulsionnelle, et il stocke ces fonctions dans sa mémoire 17.
Le dispositif 8 de traitement de signal est adapté pour traiter un signal $S_i(t)$ provenant de l'amplificateur 7 et pour déterminer un signal corrigé égal au produit de convolution du signal $S_i(t)$ avec la fonction $h'_i(-t)_{re}$ qui lui a été transmise par le calculateur 16 :

$$S'_i(t) = h'_i(-t)_{re} \otimes S_i(t)$$

le signal corrigé $S'_i(t)$ étant ensuite transmis au système central 3.

De la même façon, le dispositif 11 de traitement de signal est adapté pour traiter un signal $S_i(t)$ reçu du système central 3, en déterminant un signal corrigé $S'_i(t)$ par convolution avec la fonction $h'_i(-t)_{em}$ qui lui a été transmise par le calculateur 16 :

$$S'_i(t) = h'_i(-t)_{em} \otimes S_i(t),$$

le signal corrigé $S'_i(t)$ étant ensuite transmis à l'amplificateur 10.

Les dispositifs 8 et 11 aptes à effectuer ces produits de convolution peuvent être des calculateurs ou des portions de calculateurs (auquel cas ils peuvent éventuellement être intégrés au calculateur 16), ou encore des processeurs numériques de signaux, ou encore des composants analogiques spéciaux tels que ceux décrits dans la demande de brevet français n° 96 05102 déposée le 23 avril 1996 et intitulée "Filtre analogique pour signaux électriques".

Grâce à ces dispositions, les signaux électriques qui sont reçus soit par le système central 3 de la base 1, soit par le radiotéléphone 5, sont beaucoup plus faciles à décoder que dans l'art antérieur.

Dans un deuxième mode de réalisation, représenté schématiquement sur la figure 3, on détermine une fois pour toutes, pour chaque antenne 2 de la base 1, des approximations $h'_i(t)_{em}$ et $h'_i(t)_{re}$ valables dans une zone géographique 18 déterminée, les mêmes approximations $h'_i(t)_{em}$ et $h'_i(t)_{re}$ étant ensuite utilisées pour tout radiotéléphone se trouvant dans la zone 18.

Pour cela, au cours d'une étape préliminaire qui est mise en oeuvre lors de la mise en service de la base fixe 1, ou qui est mise en oeuvre de temps à autre au cours de la vie de la base fixe 1, on fait émettre à partir de différents points k de la zone 18 considérée une suite de signaux radio monochromatiques $E_k(t,f)$ ayant des fréquences successivement différentes, puis on calcule comme expliqué ci-dessus l'approximation $h'_{ik}(t)_{em}$ ou $h'_{ik}(t)_{re}$ de la réponse impulsionnelle entre le point k considéré et l'antenne 2 d'indice i, puis on calcule les approximations $h'_i(t)_{re}$ et $h'_i(t)_{em}$ par les formules :

$$h'_i(t)_{re} = \sum_k a_k h'_{ik}(t)_{re},$$

et

$$h'_i(t)_{em} = \sum_k a_k h'_{ik}(t)_{em}.$$

Les termes $a_k$ désignent des coefficients de pondération qui peuvent être choisis en particulier pour privilégier certaines portions de la zone géographique 18 qui correspondent à une forte probabilité de présence de radiotéléphones (trottoirs, gares, centres commerciaux, etc.), par rapport à des portions de la zone 18 qui correspondent à une moindre probabilité de présence de radiotéléphone.

Le cas échéant, les coefficients $a_k$ peuvent être tous égaux entre eux, notamment tous égaux à 1.

Le calculateur 16 garde alors dans sa mémoire 17 les fonctions $h'_i(-t)_{em}$ et $h'_i(-t)_{re}$, et ces deux fonctions sont transmises respectivement par le calculateur 16 respectivement aux dispositifs 8 et 11 lorsque la base 2 communique avec un radiotéléphone situé dans la zone 18 en question.

Dans la majeure partie des cas, la base fixe 1 couvre plusieurs zones 18, 19, et on procède aux opérations susmentionnées de détermination des fonctions $h'_i(-t)_{re}$ et $h'_i(-t)_{em}$ pour chacune des zones couvertes par la base fixe.

Ces diverses fonctions sont toutes stockées dans les mémoires 17 des calculateurs 16, et au début de la communication entre la base fixe et chaque mobile 5, le calculateur 16 correspondant à l'antenne 2 d'indice i envoie successivement au dispositif 8 de traitement de signal les différentes fonctions $h'_i(-t)_{re}$ qu'il a dans sa mémoire 17.

Le système central 3, ou tout autre dispositif, détermine alors quelles sont les fonctions $h'_i(-t)_{re}$ qui permettent d'optimiser l'ensemble des signaux corrigés $S_i(t)$, ou la somme des signaux corrigés $S_i(t)$.

Le système central 3 commande ensuite le calculateur 17 correspondant à chaque antenne 2 pour que celui-ci mémorise le lien entre un radiotéléphone 5 particulier et les approximations $h'_i(-t)_{em}$ et $h'_i(-t)_{re}$ à utiliser avec ce radiotéléphone, les fonctions en question correspondant à la zone 18 ou 19 dans laquelle se trouve le radiotéléphone.

Chaque fois que la base fixe 1 émet un message radio vers le radiotéléphone en question ou reçoit un message de ce radiotéléphone, le calculateur 16 envoie donc aux dispositifs 8 et 11 de traitement de signal les fonctions $h'_i(-t)_{re}$ et $h'_i(-t)_{em}$ à utiliser avec ce radiotéléphone.

Dans un troisième mode de réalisation, pour déterminer les approximations $h'_i(t)_{em}$ et $h'_i(t)_{re}$ de la réponse impulsionnelle entre le radiotéléphone 5 considéré et l'antenne i, on ne fait plus émettre à ce radiotéléphone une suite de signaux radio monochromatiques, mais on lui fait émettre successivement un signal modulé autour des fréquences f0 et f1, ce signal étant modulé en fréquence ou en phase de façon prédéterminée.

Les signaux radiomodulés qui sont émis par le radiotéléphone 5 pour permettre à la base 1 de déterminer respectivement les approximations $h'_i(t)_{em}$ et $h'_i(t)_{re}$ peuvent s'exprimer sous la forme :

$$EO(t) = e^{jz\pi f0t}.e^{js(t)},$$

et

$$E1(t) = e^{j2\pi f1t}.e^{js(t)},$$

où s(t) correspond à la modulation prédéterminée.

Il existe deux fonctions F0(t) et F1(t) qui correspondent respectivement aux fonctions E0(t) et E1(t), et qui sont définies par :

$$F0(t)\otimes E0(t) = \gamma 0(t),$$

et

$$F1(t)\otimes E1(t) = \gamma 1(t),$$

où $\gamma 0(t)$ et $\gamma 1(t)$ représentent des fonctions du temps qui ont un spectre constant (amplitude et phase) dans des bandes de fréquence centrées respectivement sur f0 et f1, ces bandes de fréquence ayant des largeurs qui correspondent respectivement aux largeurs de modulation autour des fréquences f0 et f1 utilisées dans la liaison radiotéléphonique en question.

Pour déterminer les approximations $h'_i(t)_{em}$ et $h'_i(t)_{re}$, on effectue respectivement le produit de convolution de FO(t) par le signal $R_i(t)$ reçu par l'antenne i pendant que le radiotéléphone 5 émet le signal E0(t), et on effectue le produit de convolution de F1(t) par le signal $R_i(t)$ reçu par l'antenne i lorsque le radiotéléphone 5 émet le signal E1(t).

A cet effet, comme représenté sur la figure 4, dans chaque ensemble 4 de traitement de signal, les circuits 12, 13, 14, 15 représentés sur la figure 2 sont remplacés par deux circuits 20,21 qui sont adaptés respectivement pour effectuer le produit de convolution du signal $R_i(t)$ respectivement avec F0(t) et F1(t), de façon à transmettre directement au calculateur 16 respectivement les approximations $h'_i(t)_{em}$ et $h'_i(t)_{re}$.

Le calculateur 16 détermine alors les fonctions temporellement inversées $h'_i(-t)_{em}$ et $h'_i(-t)_{re}$, et il les stocke dans sa mémoire 17 pour chaque radiotéléphone 5, comme expliqué précédemment.

Bien entendu, le troisième mode de réalisation qui vient d'être explicité ci-dessus est également utilisable pour déterminer les différentes approximations $h'_{ik}(t)_{em}$ et $h_{ik}(t)_{re}$ lorsqu'on souhaite déterminer une fois pour toute les approximations $h'_i(t)_{em}$ et $h_i(t)_{re}$ pour une zone géographique donnée, comme expliqué ci-dessus en regard de la figure 3.

Dans un quatrième mode de réalisation, lorsque les signaux modulés émis par le radiotéléphone 5 ou par la base 1 ont des fréquences très voisines des fréquences f0 et f1, c'est-à-dire lorsque la variation de fréquence $\Delta f$ autour de ces deux fréquences porteuses est inférieure respectivement par exemple à f0/100 et à f1/100, on peut faire l'approximation que les signaux échangés entre chaque antenne i de la base 1 et le radiotéléphone 5 sont sensiblement monochromatiques.

Dans ce cas, un signal $S_i(t)$ destiné à être émis par l'antenne i s'écrira sous la forme :

$$S_i(t) = Be^{j2\pi f0t},$$

en notation complexe.

Le signal corrigé $S_i(t)$ s'écrit alors :

$$S'_i(t) = S_i(t) \otimes h'_i(-t)$$

$$= \int_{-\infty}^{+\infty} S_i(t-\tau)h'_i(-\tau)d\tau$$

$$= \int_{-\infty}^{+\infty} Be^{j2\pi f0(t-\tau)}h'_i(-\tau)d\tau$$

$$= Be^{j2\pi f0t} \int_{-\infty}^{+\infty} e^{-j2\pi f0\tau}\ h'_i(-\tau)d\tau$$

D'où, en faisant le changement de variable $\theta = -\tau$,

$$S'_i(t) = -Be^{j2\pi f0t} \int_{-\infty}^{+\infty} e^{-j2\pi(-f0)\theta}\ h'_i(\theta)d\theta$$

$$= -S_i(t)\ .H_i(-f0),$$

où $H_i(-f0)$ est la fonction de transfert correspondant à l'antenne i et au radiotéléphone 5 pour la fréquence (-f0), qui, comme cela est bien connu, est également le conjugué de la valeur de la fonction de transfert correspondant à la fréquence (+f0) :

$$\text{Si } H_i(f0) = A_i e^{j\phi i},$$

on a donc :

$$H_i(-f0) = A_i e^{-j\phi i}.$$

Par conséquent, le calcul du signal corrigé $S'_i(t)$ se fait en multipliant le signal $S_i(t)$ par le nombre complexe $-H_i(-f0)$ :

$$S'_i(t) = S_i(t)\ .\ [-H_i(-f0)].$$

De la même façon, lorsque le signal $S_i(t)$ est un signal reçu du radiotéléphone 5, le calcul du signal corrigé $S'_i(t)$ se fait en multipliant le signal $S_i(t)$ par le nombre complexe $-H_i(-f1)$ :

$$S'_i(t) = S_i(t).[-H_i(-f1)].$$

Dans ce quatrième mode de réalisation, chaque ensemble 4 de traitement de signal peut être similaire à celui représenté sur la figure 2.

L'amplitude et la phase des nombres complexes $H_i(f0)$ et $H_i(f1)$ sont déterminées en faisant émettre à intervalles de temps réguliers des signaux monochromatiques de fréquences respectives f0 et f1 par le radiotéléphone 5 considéré, auquel cas chaque antenne i reçoit respectivement les signaux :

$$R_i(t) = H_i(f0).E_0 e^{j2\pi f0t}$$

et

$$R_i(t) = H_i(f1).E_0e^{j2\pi f1t}.$$

La base 1 et le radiotéléphone 5 disposant d'une base de temps commune, ladite base 1 est à même de déterminer le module et l'argument de chacun des nombres complexes $H_i(f0)$ et $H_i(f1)$ à partir des signaux reçus susmentionnés, au moyen des circuits 12 et 13.

Les valeurs ainsi mesurées sont transmises au calculateur 16 qui détermine les valeurs $-H_i(f0)$ et $-H_i(f1)$ et les stocke dans la mémoire 17.

Comme déjà expliqué précédemment, lorsque la base 1 dialogue ultérieurement avec un radiotéléphone 5 considéré, le calculateur 16 communique au circuit 8 le module et l'argument de $-H_i(-f1)$ et au circuit 11 le module et l'argument de $-H_i(-f0)$, ces circuits étant adaptés respectivement pour multiplier par $-H_i(-f1)$ les signaux reçus par l'antenne i et pour multiplier par $-H_i(-f0)$ les signaux destinés à être émis par l'antenne i.

Le quatrième mode de réalisation qui vient d'être décrit est bien entendu utilisable également lorsque la correction à appliquer aux signaux électriques $S_i(t)$ est une correction prédéterminée une fois pour toutes dès lors que le radiotéléphone 5 se trouve dans une zone géographique donnée, la correction des signaux $S_i(t)$ consistant alors également en une multiplication par les nombres complexes $- H_i(-f0)$ et $-H_i(-f1)$ respectivement pour les signaux d'émission ou de réception, les nombres complexes $H_i(f0)$ et $H_i(f1)$ étant définis par :

$$H_i(f0) = \sum_k a_k H_{ik}(f0)$$

et

$$H_i(f1) = \sum_k a_k H_{ik}(f1),$$

où $H_{ik}$ est la fonction de transfert entre l'antenne i et un point k de la zone considérée, les valeurs $H_{ik}(f0)$ et $H_{ik}(f1)$ étant déterminées comme expliqué ci-dessus et les termes $a_k$ étant des coefficients de pondération similaires à ceux déjà explicités pour le deuxième mode de réalisation.

Dans un cinquième mode de réalisation, lorsque les signaux $S_i(t)$ destinés à être émis par chaque antenne i sont des signaux modulés, de préférence dans une bande de fréquences relativement faible autour de la fréquence porteuse f0 d' émission, ces signaux $S_i(t)$ peuvent être traités de façon simplifié.

En effet, si l'on pose :

$$S_i(t) = Be^{j2\pi f0t}.e^{js(t)},$$

où s(t) est le signal modulant, alors, le signal corrigé $S'_i(t)$ qui doit être émis par l'antenne i peut s'écrire sous la forme :

$$S'_i(t) = S_i(t) \otimes h_i(-t)_{em}$$

$$= \int_{-\infty}^{+\infty} Be^{j2\pi f0(t-\tau)} . e^{js(t-\tau)} h_i(-\tau)_{em} d\tau$$

$$= Be^{j2\pi f0t} \int_{-\infty}^{+\infty} e^{-j2\pi f0\tau} . e^{js(t-\tau)} \; hi(-\tau)_{em} d\tau$$

$$= Be^{j2\pi f0t} . [-H_i(-f0)] . \int_{-\infty}^{+\infty} [-Hi(-f0)]^{-1} e^{-j2\pi f0\tau} e^{js(t-\tau)} h_i(-\tau)_{em} d\tau$$

$$= \quad P(t) . [-H_i(-f0)] . C_i(t)$$

où :

P(t) est la porteuse de fréquence f0,
$H_i(-f0)$ est le conjugué de la valeur complexe de la fonction de transfert $H_i$ pour la fréquence f0 : $h'i(-f0) = A_i e^{-j\phi i}$, si $H_i(f0) = A_i e^{j\phi i}$,
et $C_i(t)$ est un terme correcteur qui est une fonction relativement lente du temps t, de sorte que cette fonction peut être calculée par voie numérique.

Dans ce mode de réalisation, chaque ensemble 4 de traitement de signal peut être par exemple tel que représenté sur la figure 5.

Cet ensemble 4 de traitement de signal se distingue de celui représenté sur la figure 2 par le fait qu'il comporte non seulement les circuits 12, 13, 14, 15 permettant de mesurer l'amplitude et la phase d'un signal reçu par l'antenne 2, mais encore les circuits 20, 21 déjà représentés sur la figure 4, qui permettent de déterminer directement les approximations $h'_i(t)_{em}$ et $h'_i(t)_{re}$.

Dans ce mode de réalisation, chaque radiotéléphone 5 qui est en communication avec la base 1 émet de temps à autre d'abord uniquement un signal monochromatique de fréquence f0, ce qui permet au calculateur 16 de déterminer l'amplitude et la phase de $-H_i(-f0)$, comme explicité ci-dessus dans le quatrième mode de réalisation, puis le radiotéléphone 5 émet successivement un signal modulé autour de la fréquence f0 et un signal modulé autour de la fréquence f1, ce qui permet au calculateur 16 de connaître les approximations $h'_i(t)_{em}$ et $h'_i(t)_{re}$, donc $h'_i(-t)_{em}$ et $h'_i(-t)_{re}$.

Les différentes données $-H_i(-f0)$, $h'_i(-t)_{em}$ et $h'_i(t)_{re}$ sont alors stockées dans la mémoire 17, pour chaque radiotéléphone 5 qui communique avec la base 1.

Lorsqu'un radiotéléphone 5 particulier communique avec la base 1 à un instant donné, le calculateur 16 envoie alors vers le dispositif 8 de traitement de signal les données correspondant à l'approximation $h'_i(-t)_{re}$ et vers le dispositif 11 de traitement de signal les données correspondant à $-H_i(-f0)$ et à $h'_i(-t)_{em}$.

Le dispositif 8 de traitement de signal fonctionne comme décrit précédemment en regard des figures 2 et 4, tandis que le dispositif 11 de traitement de signal est un dispositif simplifié qui comprend :

- un premier circuit analogique 22 qui reçoit du calculateur 16 les données correspondant à $-H_i(-f0)$ et qui reçoit du système central 3 la porteuse P(t) de fréquence f0, pour déterminer le produit P(t) . $[-H_i(-f0)]$, envoyé à une sortie 22a,
- un deuxième circuit 23 numérique, qui reçoit du calculateur 16 les données correspondant à $-H_i(-f0)$ et à l'approximation $h'_i(-t)_{em}$ et qui reçoit du système central 3 le signal modulant s(t) qui porte l'information devant.être transmise vers le radiotéléphone 5 considéré, ce deuxième circuit 23 étant adapté pour calculer la fonction correctrice $C_i(t)$ mentionnée ci-dessus et l'envoyer à une sortie 23a,
- et un troisième circuit 24 qui est relié aux sorties des deux premiers circuit 22, 23 pour déterminer le produit des signaux de sortie de ces circuits, produit qui correspond au signal corrigé $S'_i(t)$.

## Revendications

**1.** Procédé pour optimiser la communication radio entre d'une part une base fixe (1) émettrice et réceptrice, pourvue d'une pluralité d'antennes (2) synchronisées agencées en réseau, et d'autre part au moins un mobile (5) émetteur et récepteur, ce procédé consistant, pour chaque antenne i, à traiter dans la base fixe un signal électrique $S_i(t)$ qui est un signal de réception reçu du mobile considéré par cette antenne ou qui est un signal d'émission destiné à être émis par ladite antenne vers ce mobile, en déterminant un signal électrique corrigé

$$S'_i(t) = h'_i(-t) \otimes S_i(t),$$

où :

- $\otimes$ désigne le produit de convolution,
- t désigne le temps,
- $h'_i(-t)$ est une approximation de l'inversion temporelle de la réponse impulsionnelle $h_i(t)$ entre l'antenne i et le mobile, cette réponse impulsionnelle étant telle que lorsqu'un signal radio E(t) est émis par l'un de l'antenne et du mobile, l'autre de ces deux éléments reçoit un signal $R(t)=h_i(t) \otimes E(t)$,

le signal corrigé $S'_i(t)$ étant ensuite soit émis par l'antenne considérée vers le mobile (5) si le signal $S_i(t)$ est un signal d'émission, soit combiné aux autres signaux reçus par les autres antennes (2) de la base fixe si le signal $S_i(t)$ est un signal de réception.

**2.** Procédé selon la revendication 1, comportant les étapes suivantes :

a) déterminer pour chaque antenne i (2) une approximation $h'_i(t)$ de la réponse impulsionnelle $h_i(t)$,
b) inverser temporellement ladite approximation $h'_i(t)$, en déterminant ainsi l'approximation $h'_i(-t)$ de la réponse impulsionnelle inverse $h_i(-t)$,
c) et pour chaque antenne i, traiter le signal électrique $S_i(t)$ afin de déterminer le signal corrigé correspondant $S'_i(t)$.

**3.** Procédé selon la revendication 2, dans lequel, au cours de l'étape a), l'approximation $h'_i(t)$ de la réponse impulsionnelle propre à chaque antenne (2) est déterminée à partir d'un signal radio prédéterminé émis par le mobile, cette étape a) étant conduite à intervalles de temps réguliers pour chaque mobile.

**4.** Procédé selon la revendication 2, dans lequel les étapes a) et b) sont effectuées une fois pour toutes, pour une zone géographique donnée (18,19), l'étape a) consistant à émettre au moins un signal radio prédéterminé successivement à partir d'une pluralité de points k de la zone considérée, pour déterminer ainsi une série d' approximations $h'_{ik}(t)$ des réponses impulsionnelles $h_{ik}(t)$ entre chaque point k et chaque antenne i de la base (1), puis à calculer l'approximation $h'_i(t)$ par la formule

$$h'_i(t) = \sum_k a_k h'_{ik}(t),$$

où les termes $a_k$ désignent des coefficients de pondération, l'inversion temporelle h'i(-t) de cette approximation $h'_i(t)$ étant ensuite utilisée à l'étape c) pour traiter les signaux émis vers ou reçus de tout mobile se trouvant dans la zone donnée susmentionnée.

**5.** Procédé selon la revendication 4, dans lequel la base fixe (1) couvre plusieurs des zones (18, 19) susmentionnées, une série d'approximations $h'_i(-t)$ de l'inversion temporelle de la réponse impulsionnelle ayant été déterminée une fois pour toutes aux étapes a) et b) pour chacune des zones susmentionnées,
et dans lequel on met en oeuvre successivement l'étape c) au moins au début de chaque communication entre la base fixe (1) et chaque mobile (5), respectivement avec chacune des séries d' approximations $h'_i(-t)$ correspondant respectivement aux différentes zones, en déterminant à chaque fois un signal corrigé $S'_i(t)$ à partir d'un signal $S_i(t)$ reçu du mobile considéré, puis en déterminant quelle série d'approximations $h'_i(-t)$ correspondant à une zone donnée optimise la combinaison des signaux corrigés $S'_i(t)$, cette série d'approximations $h'_i(-t)$ étant ensuite utilisée pour corriger les signaux émis vers ou reçus du mobile considéré .

**6.** Procédé selon l'une quelconque des revendications 3 à 5, dans lequel les signaux radio normalement émis par la base (1) sont des signaux modulés ayant une fréquence porteuse f0, les signaux normalement émis par le mobile (5) étant des signaux modulés ayant une fréquence porteuse f1 différente de f0, et les étapes a) et b) étant conduites :

- d'une part, en faisant émettre par le mobile (5) ou à partir de chaque point k, un premier signal radio prédéterminé ayant des fréquences voisines de f0 pour déterminer ainsi une approximation $h'_i(-t)_{em}$ de l' inversion temporelle de là réponse impulsionnelle qui soit valable pour traiter ultérieurement au cours de l'étape c) les signaux destinés à être émis par l'antenne i,
- et d'autre part, en faisant émettre, par le mobile (5) ou à partir de chaque point k, un second signal radio prédéterminé ayant des fréquences voisines de f1 pour déterminer ainsi une approximation $h'_i(-t)_{re}$ de l'inversion temporelle de la réponse impulsionnelle qui soit valable pour traiter ultérieurement au cours de l'étape c) les signaux reçus par l'antenne i.

**7.** Procédé selon l'une quelconque des revendications 2 à 6, dans lequel les signaux radio normalement émis par la base (1) sont des signaux modulés ayant une fréquence porteuse f0, le procédé comportant les étapes supplémentaires suivantes :

a'1) faire émettre par le mobile (5) ou à partir de chaque point k un signal radio monochromatique E(t,f0) de fréquence f0,
a'2) capter au moyen de chaque antenne i un signal électrique monochromatique $R_i(t,f0)$ correspondant au signal émis E(t,f0),
a'3) déterminer à partir de ce signal capté une valeur complexe $H_i(f0) = A_i e^{j\phi i}$ définie par : $R_i(t,f0) = H_i(f0).E(t,f0)$,

L'étape c) du procédé comportant par ailleurs les trois sous-étapes suivantes, pour déterminer le signal corrigé $S'_i(t)$ à partir d'un signal d'émission $S_i(t) = P(t).e^{js(t)}$, où P(t) est un signal porteur de fréquence f0 et s(t) est un signal modulant :

c1) déterminer par voie analogique le produit

$$P'(t) = P(t).[-H_i(-f0)], \text{ où } H_i(-f0) = A_i e^{-j\phi i}$$

c2) calculer par voie numérique la fonction

$$C_i(t) = \int_{-\infty}^{+\infty} [-H_i(-f0)]^{-1} e^{-j2\pi f0 \tau} e^{js(t-\tau)} h'_i(-\tau)\, d\tau$$

c3) et déterminer le signal corrigé $S'_i(t)$ en effectuant le produit des fonctions complexes P'(t) et $C_i(t)$.

**8.** Procédé selon la revendication 1, dans lequel le signal à corriger $S_i(t)$ est un signal modulé ayant une fréquence porteuse f déterminée, ce signal étant modulé sur une plage de fréquences dont la largeur est inférieure à 1% de la fréquence porteuse f,
le procédé comportant les étapes suivantes :

d) déterminer $H_i(f) = A_i e^{j\phi i}$ qui est la valeur complexe de la fonction de transfert entre l'antenne i et le mobile pour la fréquence f, cette fonction de transfert étant telle que lorsqu'un signal radio monochromatique E (t, f ) de fréquence f est émis par l'un de l'antenne et du mobile, l'autre de ces deux éléments reçoit un signal $R(t, f) = H_i(f) .E(t,f)$,
e) et déterminer le signal corrigé $S'_i(t)$ de façon approximée par le produit complexe :

$$S'_i(t) = [-H_i(-f)].S_i(t), \text{ où } H_i(-f) = A_i e^{-j\phi i}.$$

**9.** Procédé selon la revendication 8, dans lequel, au cours de l'étape d), la valeur $H_i(f)$ est déterminée dans la base (1) à partir d'un signal radio monochromatique de fréquence f émis par le mobile, cette détermination étant effectuée

à intervalles de temps réguliers pour chaque mobile.

**10.** Procédé selon la revendication 8, dans lequel, au cours de l'étape d) , la fonction de transfert $H_i(f)$ est déterminée pour une zone donnée (18, 19) une fois pour toutes, en faisant émettre un signal radio monochromatique de fréquence f successivement à partir d'une pluralité de points k de la zone considérée, pour déterminer ainsi une série de valeurs $H_{ik}(f)$ des fonctions de transfert $H_{ik}$ entre chaque point k et chaque antenne i de la base (1), puis pour calculer la valeur $H_i(f)$ par la formule

$$H_i(f) = \sum_k a_i H_{ik}(f),$$

où les termes $a_k$ désignent des coefficients de pondération, la valeur Hi(-f) correspondant à cette valeur $H_i(f)$ étant ensuite utilisée pour traiter les signaux émis vers ou reçus de tout mobile se trouvant dans la zone donnée susmentionnée.

**11.** Procédé selon la revendication 10, dans lequel la base fixe (1) couvre plusieurs des zones (18, 19) susmentionnées, une série de valeurs $H_i(f)$ de la fonction de transfert ayant été déterminée à l'étape d) pour chacune des zones susmentionnées, et dans lequel on met en oeuvre successivement l'étape e) au moins au début de chaque communication entre la base fixe (1) et chaque mobile (5), avec chacune des séries d'approximations $H_i(-f)$ correspondant respectivement aux différentes zones, en déterminant à chaque fois un signal corrigé $S'_i(t)$ à partir d'un signal $S_i(t)$ reçu du mobile considéré, puis en déterminant quelle série de valeurs $H_i(-f)$ correspondant à une zone donnée, optimise la combinaison des signaux corrigés $S'_i(t)$, cette série de valeurs $H_i(-f)$ étant ensuite utilisée à l'étape e) pour corriger les signaux émis vers ou reçus du mobile considéré.

**12.** Procédé selon l'une quelconque des revendications 8 à 11, dans lequel les signaux radio normalement émis par la base (1) sont des signaux modulés ayant une fréquence porteuse f0, les signaux normalement émis par un mobile (5) étant des signaux modulés ayant une fréquence porteuse f1 différente de f0, et l'étape d) étant conduite :

- d'une part en faisant émettre par le mobile (5) ou par chaque point k un signal radio monochromatique de fréquence f0 pour déterminer ainsi une valeur $H_i(f0)$ de la fonction de transfert telle que la valeur correspondante Hi(-f0) soit valable pour traiter ultérieurement au cours de l'étape e) les signaux destinés à être émis par l'antenne i,
- et d'autre part en faisant émettre par le mobile (5) ou par chaque point k un signal radio monochromat ique de fréquence f1 pour déterminer ainsi une valeur $H_i(f1)$ de la fonction de transfert telle que la valeur Hi(-f1) soit valable pour traiter ultérieurement au cours de l'étape e) les signaux reçus par l'antenne i.

**Patentansprüche**

**1.** Verfahren zum Optimieren der Funkkommunikation zwischen einerseits einer festen Sende- und Empfangsbasis (1), die mit einer Mehrzahl von synchronisierten und im Netz betriebenen Antennen (2) versehen ist, und andererseits mindestens einem Sendeund Empfangs-Mobilteil (5), wobei dieses Verfahren darin besteht, für jede Antenne i in der festen Basis ein elektrisches Signal $S_i(t)$ zu behandeln, das ein Empfangssignal ist, das von dem betrachteten Mobilteil durch diese Antenne empfangen wurde oder das ein Sendesignal ist, das von der besagten Antenne zu diesem Mobilteil ausgesendet werden soll, indem man ein korrigiertes elektrisches Signal bestimmt

$$S'_i(t) = h'_i(-t) \otimes S_i(t),$$

wobei

- $\otimes$ das Faltungsprodukt bezeichnet,
- t die Zeit bezeichnet,
- $h'_i(-t)$ eine Annäherung der zeitlichen Umkehrung der Impulsantwort $h_i(t)$ zwischen der Antenne i und dem Mobilteil ist, wobei diese Impulsantwort so beschaffen ist, dass, wenn ein Funksignal E(t) von der Antenne oder dem Mobilteil ausgesendet wird, das andere dieser beiden Elemente ein Signal $R(t) = h_i(t) \times E(t)$ ist,

wobei das korrigierte Signal $S'_i(t)$ sodann entweder von der betrachteten Antenne zu dem Mobilteil (5) ausgesendet wird, wenn das Signal $S_i(t)$ ein Sendesignal ist, oder mit anderen Signalen kombiniert wird, die von den anderen Antennen (2) der festen Basis empfangen werden, wenn das Signal $S_i(t)$ ein Empfangssignal ist.

**2.** Verfahren nach Anspruch 1, folgende Schritte umfassend:

a) für jede Antenne i (2) eine Annäherung $h'_i(t)$ der Impulsantwort $h_i(t)$ zu bestimmen,
b) die besagte Annäherung $h'_i(t)$ zeitlich umzukehren, um so die Annäherung $h'_i(-t)$ der umgekehrten Impulsantwort

$h_i(-t)$ zu bestimmen,

c) und für jede Antenne i das elektrische Signal $S_i(t)$ zu behandeln um das entsprechende korrigierte Signal $S'_i(t)$ zu bestimmen.

**3.** Verfahren nach Anspruch 2, bei dem im Verlauf des Schrittes a) die Annäherung $h'_i(t)$ der eigenen Impulsantwort jeder Antenne (2) aus einem vorbestimmten Funksignal bestimmt wird, das von dem Mobilteil gesendet wird, wobei dieser Schritt a) in regelmäßigen Zeitintervallen für jedes Mobilteil durchgeführt wird.

**4.** Verfahren nach Anspruch 2, bei dem die Schritte a) und b) ein für alle Male für eine gegebene geographische Zone (18, 19) durchgeführt werden, wobei der Schritt a) darin besteht, mindestens ein vorbestimmtes Funksignal nacheinander von einer Mehrzahl von Orten k der betrachteten Zone auszusenden, um so eine Reihe von Annäherungen $h'_{ik}(t)$ von Impulsantworten $h_{ik}(t)$ zwischen jedem Ort k und jeder Antenne i der Basis (1) zu bestimmen, sodann die Annäherung $h'_i(t)$ durch die Formel $h'_i(t) = \square_k a_k h'_{ik}(t)$ zu berechnen, worin die Ausdrücke $a_k$ die Gewichtungskoeffizienten bezeichnen, und wobei sodann die zeitliche Umkehrung $h'_i(-t)$ dieser Annäherung $h'_i(t)$ in dem Schritt c) benutzt wird, um die Signale zu behandeln, die zu jedem Mobilteil ausgesendet oder von jedem Mobilteil empfangen werden, welches sich in der vorerwähnten betrachteten Zone befindet.

**5.** Verfahren nach Anspruch 4, bei dem die feste Basis (2) mehrere der vorerwähnten Zonen abdeckt, nachdem ein für alle Male eine Reihe von Annäherungen $h'_i(-t)$ der zeitlichen Umkehrung der Impulsantwort für jede der vorerwähnten Zonen in den Schritten a) und b) ermittelt worden ist,
und bei dem man nacheinander den Schritt c) zumindest zu Beginn jeder Kommunikation zwischen der festen Basis (1) und jedem Mobilteil (5) durchführt, jeweils mit jeder der Reihe von den verschiedenen Zonen entsprechenden Annäherungen $h'_i(-t)$, indem jedes Mal ein korrigiertes Signal $S'_i(t)$ aus einem Signal $S_i(t)$ ermittelt wird, das von dem betrachteten Mobilteil empfangen wird, sodann bestimmt wird, welche Reihe von einer gegebenen Zone entsprechenden Annäherungen $h'_i(-t)$ die Kombination der korrigierten Signale $S'_i(t)$ optimiert, und dann diese Reihe von Annäherungen $h'_i(-t)$ zum Korrigieren der Signale verwendet wird, die zu dem betrachteten Mobilteil ausgesendet oder von diesem empfangen wird.

**6.** Verfahren nach einem der Ansprüche 3 bis 5, bei dem die normalerweise von der Basis (1) ausgesendeten Funksignale modulierte Signale mit einer Trägerfrequenz f0 sind, und die normalerweise von dem Mobilteil (5) ausgesendeten Signale modulierte Signale mit einer von f0 verschiedenen Trägerfrequenz f1 sind, und die Schritte a) und b) durchgeführt werden:

- einerseits, indem man durch das Mobilteil (5) oder ausgehend von jedem Ort k ein erstes vorbestimmtes Funksignal aussenden lässt, das Frequenzen in der Nähe von f0 hat, um so eine Annäherung $h'_i(-t)_{em}$ der zeitlichen Umkehrung der Impulsantwort zu bestimmen, die verwendbar ist, um später im Verlauf des Schrittes c) die zum Aussenden durch die Antenne i bestimmten Signale zu behandeln,
- und andererseits, indem man durch das Mobilteil (5) oder ausgehend von jedem Ort k ein zweites vorbestimmtes Funksignal aussenden lässt, das Frequenzen in der Nähe von f1 hat, um so eine Annäherung $h'_i(-t)_{re}$ der zeitlichen Umkehrung der Impulsantwort zu bestimmen, die verwendbar ist, um später im Verlauf des Schrittes c) die von der Antenne i empfangenen Signale zu behandeln.

**7.** Verfahren nach einem der Ansprüche 2 bis 6, bei dem die normalerweise von der Basis (1) ausgesendeten Funksignale modulierte Signale mit einer Trägerfrequenz f0 sind,
wobei das Verfahren folgende zusätzliche Schritte umfasst:

a'1) von dem Mobilteil (5) oder ausgehend von jedem Ort k ein monochromatisches Funksignal E(t,f0) mit der Frequenz f0 aussenden zu lassen,
a'2) mittels jeder Antenne i ein elektrisches monochromatisches Signal $R_i$(t,f0) aufnehmen zu lassen, das dem gesendeten Signal E(t,f0) entspricht,
a'3) aus diesem aufgenommenen Signal einen komplexen Wert $H_i(f0) = A_i\ e^{j\square}$ zu bestimmen, der durch:

$$R_i(t,f0) = H_i(f0) \cdot E(t,f0)$$

definiert ist,

wobei der Schritt c) des Verfahrens außerdem die drei folgenden Unterschritte umfasst, um das korrigierte Signal $S'_i(t)$ ausgehend von einem Sendesignal $S_i(t) = P(t) \cdot e^{j\ s(t)}$ zu bestimmen, worin P(t) ein Trägersignal der Frequenz f0 ist und s(t) ein modulierendes Signal:

c1) auf analogem Wege das Produkt

$$P'(t) = P(t) \cdot [-H_i(-f0)]$$

zu bestimmen,
worin $H_i(-f0) = A_i\ e^{-j\square}$ ist,
c2) auf numerischem Wege die Funktion

$$C_i(t) = \int [-H_i(-f0)]^{-1} \cdot e^{-j\ 2\square\ f0\ \square} \cdot e^{js(t-\square)} \cdot h'_i(-\square)\ d\square \text{ zu}$$

berechnen und
c3) das korrigierte Signal $S'_i(t)$ zu bestimmen, indem das Produkt der komplexen Funktionen P'(t) und $C_i(t)$ ermittelt wird.

**8.** Verfahren nach Anspruch 1, bei dem das zu korrigierende Signal $S_i(t)$ ein moduliertes Signal mit einer bestimmten Trägerfrequenz f ist, wobei dieses Signal auf einer Frequenzbandbreite moduliert wird, deren Breite geringer als 1 % der Trägerfrequenz f ist, und wobei das Verfahren folgende Schritte umfasst:

d) $H_i(f) = A_i \cdot e^{-j\square}$ zu bestimmen, welches der komplexe Wert der Übertragungsfunktion zwischen der Antenne i und dem Mobilteil für die Frequenz f ist, wobei diese Übertragungsfunktion so geartet ist, dass, wenn von der Antenne oder dem Mobilteil ein monochromatisches Funksignal E(t,f) der Frequenz f ausgesendet wird, das andere dieser beiden Elemente ein Signal $R(t,f) = H_i(f) \cdot E(t,f)$ empfängt,
e) und das korrigierte Signal $S'_i(t)$ angenähert durch das komplexe Produkt $S'_i(t) = [-H_i(-f)] \cdot Si(t)$ zu bestimmen, worin $H_i(-f) = A_i \cdot e^{-j\square}$ ist.

**9.** Verfahren nach Anspruch 8, bei dem im Verlauf des Schrittes d) der Wert $H_i(f)$ in der Basis (1) ausgehend von einem vom Mobilteil ausgesendeten monochromatischen Funksignal der Frequenz f bestimmt wird, wobei diese Bestimmung in regelmäßigen Zeitintervallen für jedes Mobilteil durchgeführt wird.

**10.** Verfahren nach Anspruch 8, bei dem im Verlauf des Schrittes d) die Übertragungsfunktion $H_i$ (f) für eine gegebene Zone (18, 19) ein für alle Male bestimmt wird, indem man ein monochromatisches Funksignal der Frequenz f nacheinander ausgehend von einer Mehrzahl von Orten k der betrachteten Zone aussenden lässt, um so eine Reihe von Werten $H_{ik}$ (f) der Übertragungsfunktionen $H_{ik}$ zwischen jedem Ort k und jeder Antenne i der Basis (1) zu bestimmen, und um sodann den Wert $H_i$ (f) durch die Formel $H_i(f) = \square_k\ a_i \cdot H_{ik}(f)$ zu berechnen, in der die Ausdrücke $a_k$ Gewichtungskoeffizienten sind, wobei der diesem Wert Hi (f) entsprechende Wert $H_i$ (-f) dann verwendet wird, um die Signale zu behandeln, die zu jedem sich in der vorerwähnten gegebenen Zone befindenden Mobilteil ausgesendet oder von diesem empfangen werden.

**11.** Verfahren nach Anspruch 10, bei dem die feste Basis ( 1 ) mehrere der vorerwähnten Zonen abdeckt und eine Reihe von Werten $H_i$ (f) der Übertragungsfunktion im Schritt d) für jede der vorerwähnten Zonen bestimmt wurde, und bei dem man den Schritt e) zu Beginn jeder Kommunikation zwischen der festen Basis (1) und jedem Mobilteil

(5) nacheinander mit jeder der Reihe von Annäherungen $H_i(-f)$, die jeweils den unterschiedlichen Zonen entsprechen, durchführt, wobei jedes Mal ein korrigiertes Signal $S'_i(t)$ ausgehend von einem vom betrachteten Mobilteil empfangenen Signal $S_i(t)$ bestimmt wird, und sodann unter Bestimmung der einer gegebenen Zone entsprechenden Reihe von Werten $H_i(-f)$ die Kombination der korrigierten Signale $S'_i(t)$ optimiert wird, wobei diese Reihe von Werten $H_i(-f)$ dann im Schritt e) verwendet wird, um die Signale zu korrigieren, die zu dem betrachteten Mobilteil ausgesendet oder von diesem empfangen werden.

**12.** Verfahren nach einem der Ansprüche 8 bis 11, bei dem die normalerweise von der Basis (1) ausgesendeten Funksignale modulierte Signale mit einer Trägerfrequenz f0 sind, und die normalerweise von einem Mobilteil (5) ausgesendeten Signale modulierte Signale mit einer von f0 verschiedenen Trägerfrequenz f1 sind und der Schritt d) ausgeführt wird:

- einerseits, indem man durch das Mobilteil (5) oder ausgehend von jedem Ort k ein monochromatisches Funksignal der Frequenz f0 aussenden lässt, um so einen Wert $H_i$ (f0) der Übertragungsfunktion so zu bestimmen, dass der entsprechende Wert $H_i$ (-f0) brauchbar ist, um später im Verlauf des Schrittes e) die zum Aussenden durch die Antenne i bestimmten Signale zu behandeln,
- und andererseits, indem man durch das Mobilteil (5) oder ausgehend von jedem Ort k ein monochromatisches Funksignal der Frequenz f1 aussenden lässt, um so einen Wert $H_i$ (f1) der Übertragungsfunktion so zu bestimmen, dass der entsprechende Wert $H_i$ (-f1) brauchbar ist, um später im Verlauf des Schrittes e) die von der Antenne i empfangenen Signale zu behandeln.

## Claims

**1.** A method of optimizing radio communication between a fixed base transmitter/receiver station provided with a plurality of synchronized antennas organized in an array, and at least one mobile transmitter/receiver station, the method consisting, for each antenna i in the base, processing an electric signal $S_i(t)$ which is a receive signal received by said antenna from the mobile under consideration or which is a transmit signal for transmission by said antenna to said mobile, by determining a corrected electric signal

$$S'_i(t) = h'i(-t) \otimes S_i(t)$$

where:

- $\otimes$ designates the convolution product;
- t designates time; and
- $h'_i(-t)$ is an approximation to the time reversal of the impulse response $h_i(t)$ between the antenna i and the mobile, said impulse response being such that when a radio signal E(t) is transmitted by one of the antenna and the mobile, the other of said two elements receives a signal

$$R(t) = h_i(t) \otimes E(t);$$

the corrected signal $S'_i(t)$ then being either transmitted to the mobile by the antenna in question if the signal $S_i(t)$ is a transmit signal, or else being combined with the other signals as received by the other antennas of the base, if the signal $S_i(t)$ is a receive signal.

**2.** A method according to claim 1, including the following steps:

a) determining for each antenna i an approximation $h'_i(t)$ to the impulse response $h_i(t)$;
b) time reversing said approximation $h'_i(t)$, thus providing an approximation $h'_i(-t)$ to the time reversed impulse $h_i(-t)$; and
c) for each antenna i, processing the electric signal $S_i(t)$ so as to determine the corresponding corrected signal $S'_i(t)$.

**3.** A method according to claim 2, in which, during step a), the approximation h'i(t) of the impulse response specific to each antenna is determined on the basis of a predetermined radio signal t6ransmitted by the mobile, said step

a) being performed at regular time intervals for each mobile.

**4.** A method according to claim 2, in which steps a) and b) are performed once and for all, for a given geographical area, step a) consisting in transmitting at least one predetermined radio signal successively from a plurality of points k in the area under consideration, thereby determining a series of approximations $h'_{ik}(t)$ of the impulse response $h_{ik}(t)$ between each point k and each antenna i of the base, and then in computing the approximation $h'_i(t)$ using the formula $h'_i(t) = \Sigma_k a_k h'_{ik}(t)$, where the terms $a_k$ designate weighting coefficients, the time reversal $h'_i(-t)$ of said approximation $h'_i(t)$ subsequently being used in step c) for processing the signals transmitted to or received from any mobile located in the above-mentioned given area.

**5.** A method according to claim 4, in which the base covers a plurality of above-mentioned areas, a series of approximations $h'_i(-t)$ to the time reversal of the impulse response being determined once and for all in steps a) and b) for each of the above-mentioned areas, and in which step c) is implemented successively at least at the beginning of each call between a base and each mobile, respectively with each of the series of approximations $h'_i(-t)$ corresponding respectively to the various areas, determining on each occasion a corrected signal $S'_i(t)$ from a signal $S_i(t)$ received from the mobile under consideration, and then determining which series of approximations $h'_i(-t)$ corresponding to a given area optimizes the combination of corrected signals $S'_i(t)$, said series of approximations $h'_i(-t)$ subsequently being used to correct the signals transmitted to or received from the mobile under consideration.

**6.** A method according to claim 3, in which the radio signals normally transmitted by the base are modulated signals having a carrier frequency f0, the signals normally transmitted by the mobile are modulated signals having a carrier frequency f1 that is different from f0, and the steps a) and b) are performed as follows:

- firstly, by causing a first predetermined radio signal to be transmitted by the mobile or from each point k, said signal having frequencies close to f0, thereby enabling an approximation $h'_i(-t)_{tx}$ to the time reversal of the impulse response to be determined that is valid for subsequent use in step c) for processing the signals that are to be transmitted by the antenna i; and
- secondly by causing a second predetermined radio signal to be transmitted by the mobile or from each point k, said signal having frequencies close to f1, thereby enabling an approximation $h'_i(-t)_{rx}$ to the time reversal of the impulse response to be determined which is valid for subsequent use during step c) for processing the signals received by the antenna i.

**7.** A method according to claim 2, in which the radio signals normally transmitted by the base are modulated signals at a carrier frequency f0, the method including the following additional steps:

a'1) causing a monochromatic radio signal E(t,f0) of frequency f0 to be transmitted by the mobile or from each point k;
a'2) using each antenna i to pick up a monochromatic electric signal $R_i(t,f0)$ corresponding to the transmitted monochromatic signal E(t,f0); and
a'3) using the picked up signal to determine a complex value $H_i(f0) = A_i e^{j\varphi i}$ defined by:

$$R_i(t,f0) = H_i(f0).E(t,f0);$$

step c) of the method further including the following three substeps, for determining the corrected signal $S'_i(t)$ from a transmit signal $S_i(t) = P(t).e^{js(t)}$, where P (t) is a carrier signal of frequency f0, and s(t) is a modulating signal:

c1) using analog means to determine the product $P'(t) = P(t).[-H_i(-f0)$, where $H_i(-f0) = A_i e^{-j\varphi i}$;
c2) digitally computing the function

$$C_i(t) = \int_{-\infty}^{\leq +\infty} [-H_i(-f0)]^{-1} e^{-j2\pi f0\tau} e^{js(t-\tau)} h'_i(-\tau)\, d\tau$$

c3) determining the correct signal $S'_i(t)$ by obtaining the product of the complex functions P' (t) and $C_i(t)$.

**8.** A method according to claim 1, in which the signal to be corrected $S_i(t)$ is a modulated signal having a determined carrier frequency f, said signal being modulated over a range of frequencies of width that is less than 1% of the carrier frequency f, the method including the following steps:

d) determining $H_i(f) = A_i e^{j\varphi i}$ which is the complex value of the transfer function between the antenna i and the mobile at frequency f, said transfer function being such that when a monochromatic radio signal E(t,f) of frequency f is transmitted by one of the antenna and the mobile, the other of said two elements received a signal $R(t,f) = H_i(f).E(t,f)$; and

e) determining the corrected signal $S'_i(t)$ in approximate manner from the following complex product:

$$S'_i(t) = [-H_i(-f)].S_i(t) \text{ where } H_i(-f) = A_i e^{-j\varphi i \cdot}$$

**9.** A method according to claim 8, in which, during step d), the value $H_i(f)$ is determined in the base from a monochromatic radio signal of frequency f transmitted by the mobile, said determination being performed at regular time intervals for each mobile.

**10.** A method according to claim 8, in which, during step d), the transfer function $H_i(f)$ is determined for a given area once and for all, by causing a monochromatic radio signal of frequency f to be transmitted successively from a plurality of points k in the area under consideration, thereby determining a series of values $H_{ik}(f)$ for the transfer functions $H_{ik}$ between each point k and each antenna i of the base, and then calculating the value $H_i(f)$ in application of the formula:

$$H_i(f) = \Sigma_k a_i H_{ik}(f)$$

where the terms $a_k$ designate weighting coefficients, the value $H_i(-f)$ corresponding to said value $H_i(f)$ then being used to process the signals transmitted to or received from any mobile in the above-mentioned given area.

**11.** A method according to claim 10, in which the base covers a plurality of the above-mentioned areas, a series of values $H_i(f)$ for the transfer function being determined in step d) for each of the above-mentioned areas, and in which step e) is implemented at least at the beginning of each call between the base and each mobile, with each series of approximations $H_i(-f)$ corresponding to respective different areas, by determining on each occasion a corrected signal $S'_i(t)$ from a signal $S_i(t)$ received from the mobile under consideration, and then determining which series of values $H_i(-f)$ corresponding to a given area optimizes the combination of corrected signals $S'_i(t)$, said series of values $H_i(-f)$ subsequently being used in step e) to correct the signals transmitted to or the signals received from the mobile under consideration.

**12.** A method according to claim 8, in which the radio signals normally transmitted by the base are modulated signals having a carrier frequency f0, the signals normally transmitted by a mobile being modulated signals having a carrier frequency f1 different from f0, and step d) is performed as follows:

- firstly by causing a monochromatic radio signal of frequency f0 to be transmitted by the mobile or from each point k, thereby enabling to determine a value $H_i(f0)$ for the transfer function, such that the corresponding value $H_i(-f0)$ is valid subsequently during step e) for processing the signals to be transmitted by the antenna i; and
- secondly causing a monochromatic radio signal of frequency f1 to be transmitted by the mobile or from each point k in order to determine a value $H_i(f1)$ for the transfer function such that the value $H_i(-f1)$ is valid subsequently during step e) for processing the signals received by the antenna i.

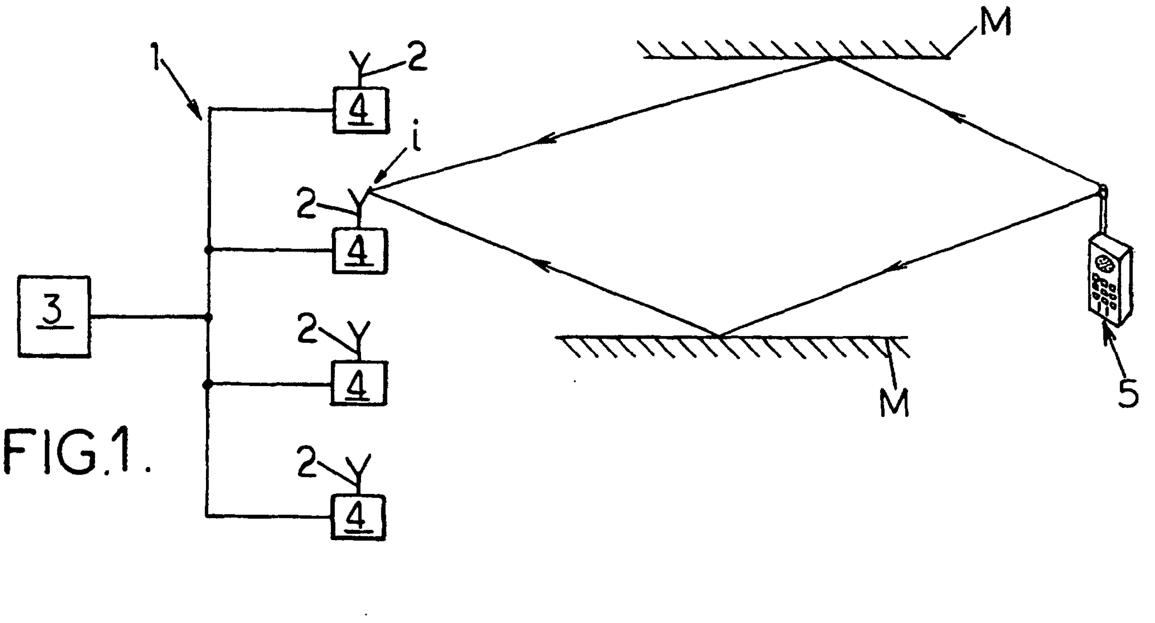


FIG.1.

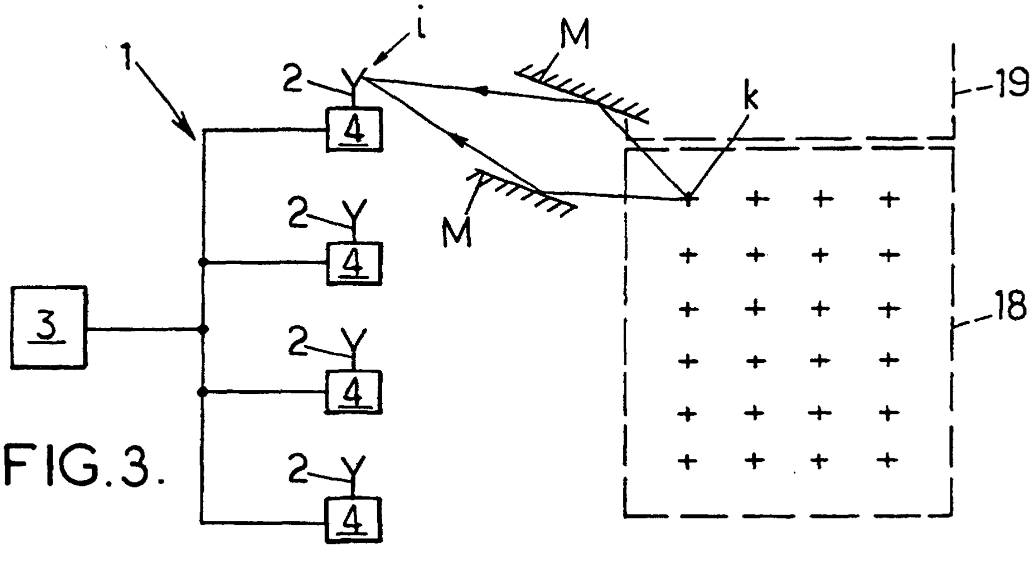


FIG.3.

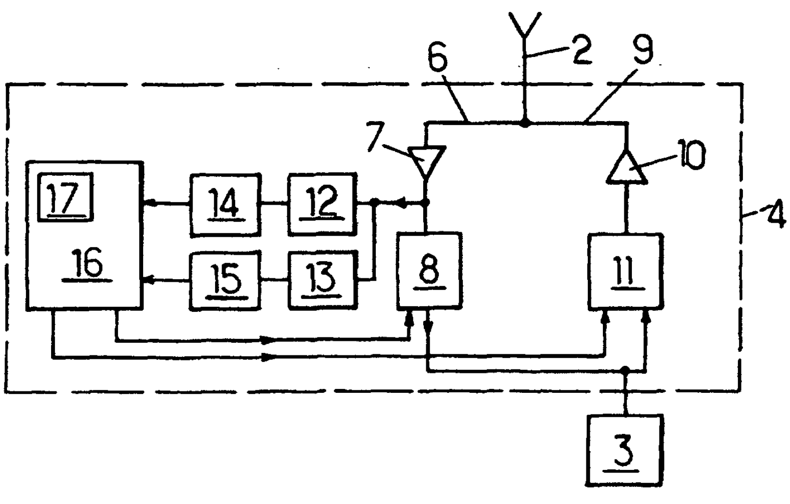


FIG.2.

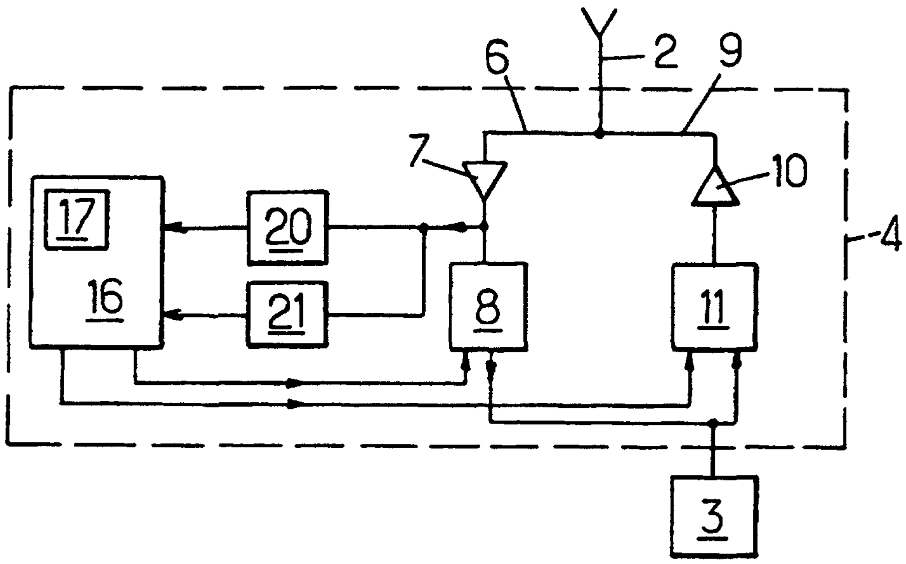
2
6
9
7
10
17
20
16
21
8
11
4
3

FIG.4.

FIG. 5.

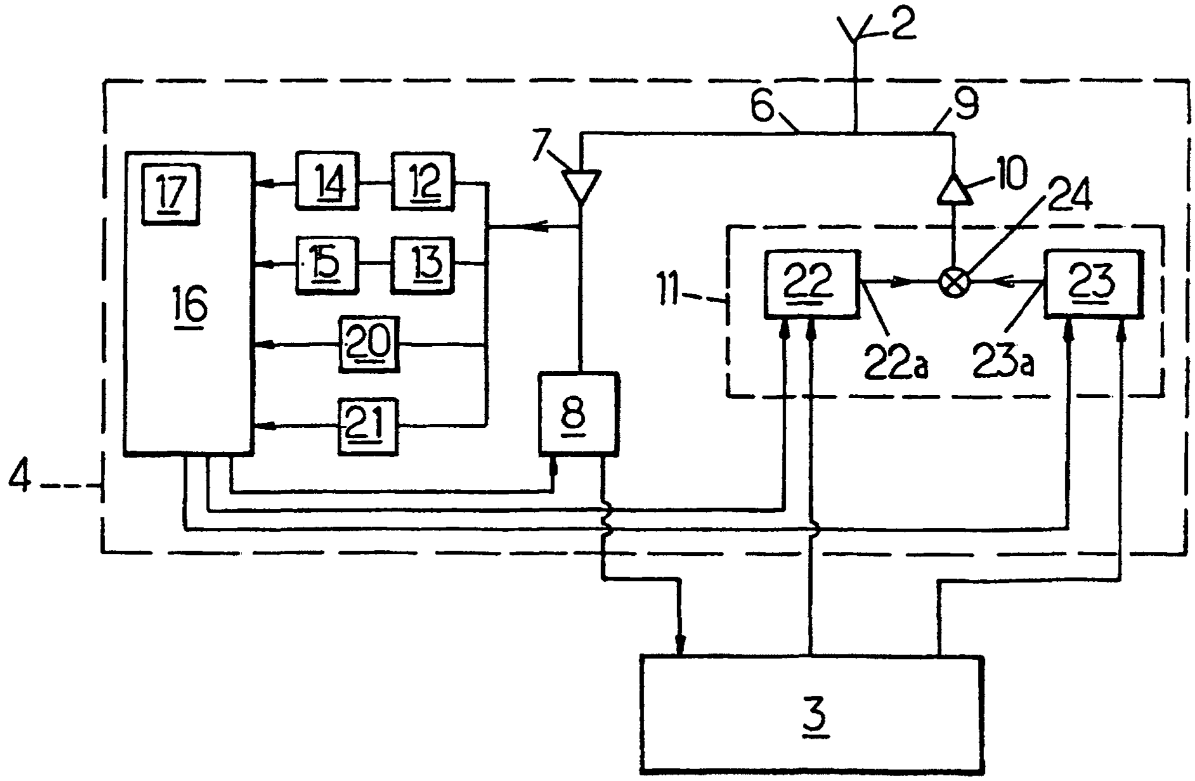
2
6
9
7
10
24
17
14
12
15
13
16
11
22
23
20
22a
23a
21
8
4
3